# FASCICULE DE BREVET EUROPEEN

(11) **EP 0 621 569 B1**
(45) Date de publication et mention de la délivrance du brevet: **14.07.1999**
(21) Numéro de dépôt: 94400798.8
(22) Date de dépôt: 13.04.1994
(51) Int. Cl.: G07F 7/10

(54) **Dispositif et procédé de protection des clés d'une carte à puce**
Vorrichtung und Verfahren zum Schutz der Schlüssel einer IC-Karte
Device for and method of protecting the keys of a chip card

(30) Priorité: 22.04.1993 FR 9304773
(43) Date de publication de la demande: 26.10.1994
(73) Titulaire: BULL CP8, 78430 Louveciennes (FR)
(72) Inventeur: Hazard, Michel, F-78124 Mareil sur Mauldre (FR)
(74) Mandataire: Corlu, Bernard Edouard

(56) Documents cités:
- EP-A- 0 055 986
- EP-A- 0 216 298
- EP-A- 0 225 010
- EP-A- 0 281 059
- EP-A- 0 409 701
- FR-A- 2 363 832
- FR-A- 2 600 190
- FR-A- 2 601 476

## Description

La présente invention concerne la protection des clés d'une carte à puce.

La sécurité des cartes à puce repose sur la conception hardware des puces et surtout sur les mécanismes cryptographiques mis en oeuvre dans le système opératoire de la carte. Les clés utilisées dans la carte par les algorithmes symétriques ou asymétriques sont secrètes. Le caractère secret de ces clés revêt donc une importance capitale pour les systèmes dont la sécurité repose sur l'exploitation de cartes à micro calculateur.

Il existe aujourd'hui, une méthode théoriquement applicable qui permette avec quelques moyens de découvrir le contenu d'une clé. Cette méthode consiste à faire basculer successivement toutes les cellules de la mémoire non volatile (ex EPROM ou EEPROM) qui enregistre les éléments binaires constituant la clé. Cette méthode peut être mise en oeuvre par un moyen électronique ou physique, sélectif permettant de modifier le contenu logique (ou la charge électrique) d'une cellule élémentaire de mémoire.

Pour toutefois réaliser une telle opération, il est absolument nécessaire de connaître la règle d'implantation physique des cellules de mémoire sur la puce et d'être en mesure d'assurer la correspondance entre ces adresses physiques, gérées par le masque lui-même et les adresses logiques, relatives ou absolues qui permettent à un utilisateur d'accéder à une information.

Dès lors que l'emplacement d'une cellule de mémorisation contenant un élément binaire constitutif d'une clé a été identifié, cette cellule peut, par exemple, être soumise à une exposition sélective de rayons X.

L'attaque de la clé consiste à faire effectuer à la carte, un calcul utilisant cette clé, de sauvegarder le résultat obtenu puis de tenter, par le moyen décrit plus haut, de modifier le contenu d'une cellule (la modification n'est possible que dans un sens, charge ou décharge de la cellule) puis de refaire le calcul précédent. S'il n'y a pas eu modification de charge, donc de la valeur binaire de la cellule, on obtient le même résultat, sinon celui-ci est modifié. On peut donc déterminer ainsi la valeur d'un bit de la clé soumise à l'attaque. En procédant ainsi de proche en proche on pourrait déterminer la valeur de l'ensemble des bits constitutifs d'une clé.

Cette possibilité de fraude est d'autant plus effective si l'on considère le cas des clés de base ou clés de carte mère qui sont implantées sur un nombre n de cartes et qui permettrait donc en attaquant par la procédure décrite ci-dessus, un bit de chacune des n cartes d'arriver à déterminer la totalité des bits de la clé de base implantée sur chacune des n cartes.

Le but de l'invention est donc de pallier les inconvénients cités ci-dessus.

L'invention concerne à cet effet un dispositif de protection selon la revendication 1, ainsi qu'un procédé de stockage et un procédé d'exploitation selon les revendications 12 et 14.

D'autres caractéristiques et avantages apparaîtront plus clairement à la lecture de la description ci-après faite en référence aux dessins annexés dans lesquels :
La figure 1 représente une vue schématique des différents éléments constituant le dispositif de protection ;
La figure 2 représente un schéma de l'algorithme d'exploitation du dispositif selon l'invention.
La figure 3 représente le procédé d'installation des clés dans le dispositif de l'invention.

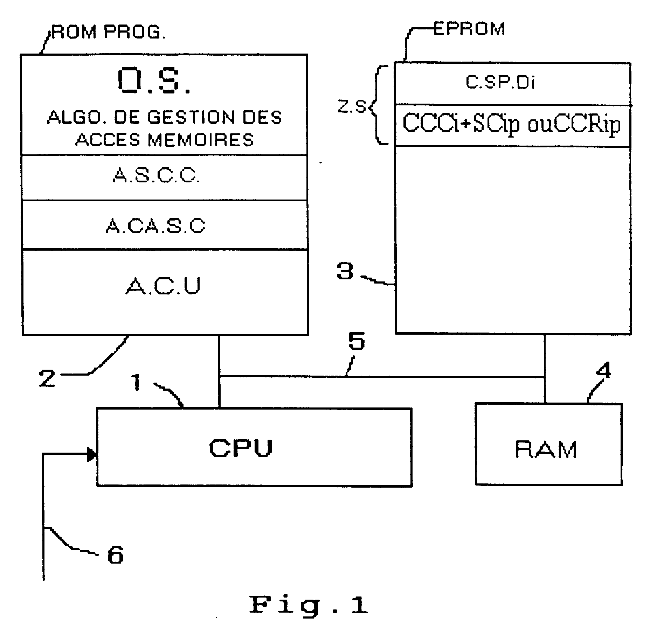

Le dispositif comporte comme représenté à la figure 1, un circuit intégré comportant un microprocesseur (1) relié par un bus (5) à une mémoire morte (2) de type ROM contenant les programmes nécessaires au fonctionnement du dispositif. Le même bus (5) relie également au processeur (1), une mémoire non volatile (3) inscriptible, par exemple du type EPROM ou EEPROM servant de mémoire utilisateur et contenant entre autre les clés d'utilisation (CCCi) affectées à un utilisateur donné et inscrites en zone secrète (ZS). Cette mémoire (3) est partagée en une zone secrète (ZS) pour laquelle l'accès en lecture ou écriture ne peut se faire qu'à partir du microprocesseur (1) sous le contrôle du système d'exploitation (OS) alors que pour les autres zones de la mémoire (3), les accès peuvent être effectués soit du processeur (1) soit de l'extérieur par une liaison (6), en fonction d'informations contenues par cette mémoire et d'un algorithme de gestion des accès mémoires faisant partie du système d'exploitation (OS). Une telle architecture est décrite plus en détail dans les demandes de brevet français FR 2 401 459 (US 4 211 919) et FR 2 461 301 (US 4 382 279). Le microprocesseur (1) de la carte est également en liaison à travers le bus (5) avec une mémoire vive (4), par exemple de type RAM. Le circuit de la carte est mis en liaison avec le monde extérieur et reçoit certaines commandes nécessaires ou certaines informations nécessaires à son fonctionnement par la liaison (6). La mémoire programme (2) comporte en plus du système d'exploitation (OS) incluant l'algorithme de gestion des accès mémoire et permettant de faire la différenciation entre un accès dans une zone secrète et de vérifier que l'instruction à exécuter est compatible avec les modalités d'accès à cette zone, d'autres programmes dont les rôles respectifs vont être définis ci-après :

Le programme A.S.C.C. constitue l'algorithme spécifique de chiffrement-déchiffrement de clés dont le rôle sera explicité ultérieurement.

Le programme A.CA.S.C peut être un algorithme de calcul des sommes de contrôle (checksum) ou de code cyclique redondant (CCR), ou un algorithme déterminant le nombre de bits d'une clé ayant une valeur logique donnée, ou un algorithme déterminant une signature à base d'une clé secrète (CS).

Enfin le programme A.CU est un algorithme de chiffrement-déchiffrement des clés utilisateur qui peut servir soit à chiffrer, soit à déchiffrer.

La carte comporte à sa livraison une clé spécifique de protection diversifiée appelée (C.SP.Di) inscrite dans la zone secrète (ZS) de la carte. Cette clé spécifique (C.SP.Di) a été élaborée à partir de la clé de base par un algorithme de diversification et pourra être protégée par utilisation du programme (A.CA.S.C). On pourra utiliser comme procédé de diversification par exemple les procédés connus par les brevets BULL FR 2 600 190 et FR 2 601 795 (US 4 811 393).

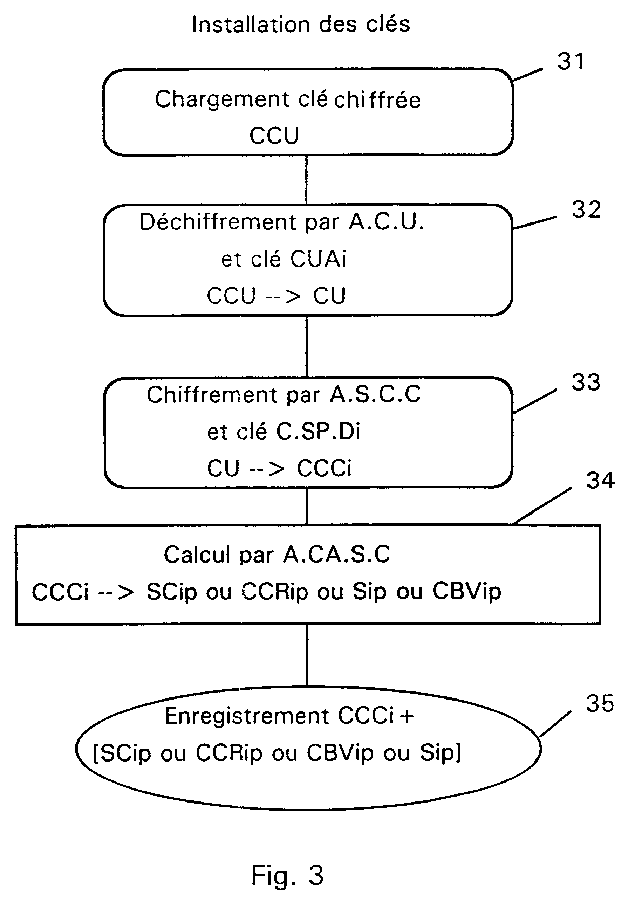

Lorsqu'un organisme habilité veut charger la carte avec une clé, cet organisme connecte la carte à un terminal qui émet en direction du microprocesseur (1) de la carte par la liason (6) une clé utilisateur chiffrée (CCU.) ou non chiffrée (CU) avec un ordre de chargement (31 fig. 3) de cette clé. Si la clé est chiffrée, le système d'exploitation (OS) lors de l'exécution de cette instruction va faire appel à l'algorithme (A.CU) et à une clé utilisateur associée (CUAi) pour déchiffrer à l'étape (32) cette clé chiffrée (CCU) en une clé utilisateur (CU.), puis le système d'exploitation (OS) lance l'étape 33. Si la clé utilisateur est non chiffrée, le système d'exploitation lance directement l'étape 33 d'exécution de l'algorithme spécifique de chiffrement des clés (A.S.C.C.) utilisant une clé spécifique diversifiée (C.SP.Di), pour permettre au microprocesseur (1) de chiffrer la clé utilisateur (CU) en une clé chiffrée appelée (CCCi). Dès que cet algorithme aura été exécuté, celui-ci rend la main au système d'exploitation (OS) qui déclenche à l'étape 34 l'exécution de l'algorithme de calcul. On notera que la clé chiffrée utilisateur (CCU) a été fournie par un moyen extérieur sécurisé ayant utilisé pour le chiffrement le même algorithme (ACU) et la même clé utilisateur associée (CUAi).

Le microprocesseur (1) exécute cet algorithme et calcule soit une somme de vérification (checksum) (SCip), soit un code cyclique redondant (CCRip) qui constitue une information de protection ou une signature (Sip) ou un compte des bits de même valeur composant la clé (CBVip). Cette information de protection (SCip ou CCRip ou Sip ou CBVip) est associée à la clé (CCCi), soit directement dans une zone secrète de la mémoire (3), soit en établissant par le système d'exploitation (OS) un lien entre la clé (CCCi) et l'information de protection (SCip ou CCRip ou Sip ou CBVip). Ce lien dans ce cas sera connu uniquement par l'algorithme de gestion des accès mémoires. Ainsi, on peut concevoir que la clé (CCCi) soit gardée en zone secrète (ZS) alors que l'information de protection (SCip ou CCRip ou Sip ou CBVip) soit stockée ailleurs dans la mémoire (3) par exemple dans une zone définie grâce à un index intervenant dans l'algorithme de gestion des accès mémoire (sur l'adresse de la clé (CCCi). L'algorithme (A.CA.S.C) sera dans le cas d'un calcul d'une somme de contrôle, par exemple, une instruction d'addition de l'ensemble des octets de la clé chiffrée (CCCi). Le résultat de cette opération constitue dans cet exemple, l'information de protection à sauvegarder dans l'endroit désigné par l'algorithme de gestion des accès mémoire ou dans le même emplacement de sauvegarde des clés sous forme d'un octet supplémentaire.

Ce procédé pourra être mis en oeuvre systématiquement pour chaque mise en place d'une clé qui devra être sauvegardée dans la zone secrète de la mémoire et permet l'utilisation du procédé d'exploitation décrit ci-après :

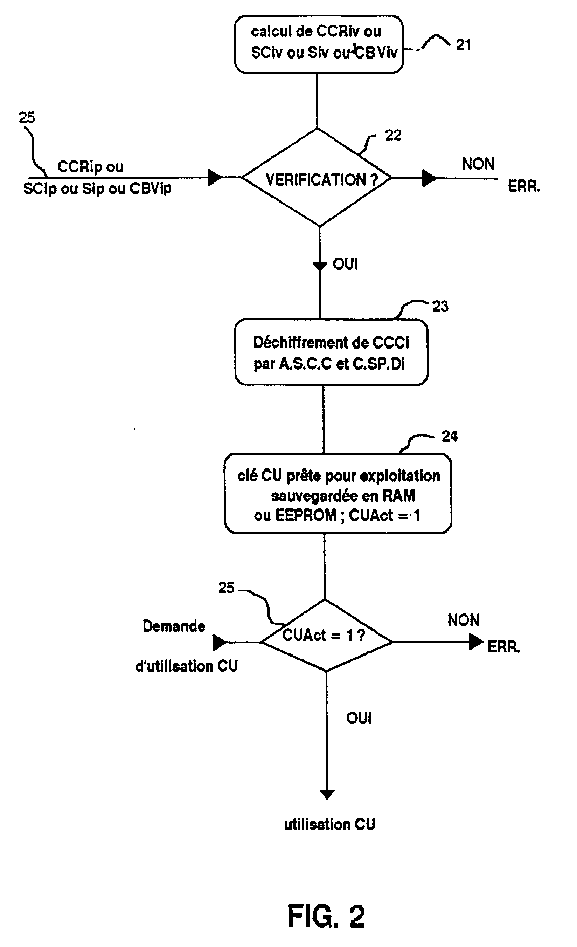

Lorsque au cours de l'exploitation de la carte, le terminal envoie au microprocesseur (1) de la carte une commande faisant appel à une clé, par exemple la clé utilisateur chiffrée (CCCi) pour par exemple une opération de contrôle de certificat (cf. demande de brevet BULL français N° 2 601 476, FR 2 601 535, FR 2 592 510 (US 4 825 052), le système d'exploitation (OS) va rechercher la clé (CCCi) dans la zone secrète (ZS) et exécuter un algorithme de calcul d'une somme de contrôle en lançant à l'étape (21) l'algorithme (A.CA.S.C.). L'information de vérification (CCRiv ou SCiv ou Siv ou CBViv) ainsi calculée est comparée à l'opération (22) de la figure 2 avec l'information de protection (25) (CCRip ou SCip ou Sip ou CBVip) qui avait été sauvegardée lors de la mise en place de la clé. Si l'information de vérification résultant du calcul effectué par l'algorithme (A.CA.S.C) représentée à l'étape 21 n'est pas identique à l'information de protection, le microprocesseur (1) va générer un signal d'erreur et éventuellement provoquer sur le terminal l'affichage d'une information signalant une erreur ou bien invalider la clé (CCCi). Si l'opération de vérification s'est déroulée correctement, la comparaison étant positive, l'étape suivante (23) du système d'exploitation sera exécutée. Cette étape consiste en un déchiffrement de la clé chiffrée (CCCi.). par l'algorithme spécifique de chiffrement de clés (A.S.C.C.) et la clé (C.SP.Di). Cet algorithme (A.S.C.C) étant conservé dans la mémoire (2) ROM, il ne sera à aucun moment accessible à l'utilisateur ou au terminal. L'exécution de cet algorithme A.S.C.C. est effectuée à l'aide de la clé (C.SP.Di) par le microprocesseur (1) qui délivre comme résultat la clé utilisateur (CU). Ce résultat est ensuite sauvegardé à l'étape (24) soit en RAM (4), soit dans l'EEPROM (3) dans une zone non secrète pour permettre une exploitation ultérieure dans, par exemple, le procédé de contrôle de certificat cité ci-dessus. Cette sauvegarde est effectuée pour au plus la durée d'une session, c'est-à-dire la durée de connexion de la carte au terminal. Une clé utilisateur (CU) sauvegardée ne pourra être utilisée que si elle résulte d'un calcul effectué au cours de la même session, ce qui est exprimé par un indicateur (CUAct) activé, par exemple en le positionnant à 1 pour montrer que la clé (CU) est active et signifier qu'elle a été calculée au cours de la même session.

Cet indicateur (CUAct) est toujours remis à zéro en début de session. Avant une utilisation de (CU) dans un calcul, on effectue une étape de test (25) pour déterminer si l'indicateur (CUAct) a la valeur "1" requise ou non. Si oui, le calcul utilisant (CU) est effectué, si non, la carte génère un signal d'erreur qui redonne la main au terminal, permettant ainsi à ce dernier de lancer la séquence de détermination de (CU).

Toute modification à la portée de l'homme de métier fait également partie de l'invention telle que définie dans les revendications.

## Revendications

1. Dispositif de protection d'une clé utilisateur (CU) d'une carte à puce, disposé dans la carte à puce et caractérisé en ce qu'il comprend :
- des moyens de traitement de l'information (1) agencés pour calculer une forme chiffrée (CCCi) de la clé utilisateur (CU) à partir d'une clé diversifiée (CSPDi) et d'un algorithme (ASCC) de chiffrement / déchiffrement de clé utilisateur ;
- des moyens de stockage (3) pour stocker la clé utilisateur chiffrée (CCCi) et, en association avec elle, une information de protection (SCip ; CCRip ; Sip ; CBVip) comprenant une information dépendante de cette clé ;
- des moyens de détection (OS) permettant à la carte de vérifier l'intégrité de la clé chiffrée (CCCi) en faisant calculer par les moyens de traitement de l'information (1) une information de vérification (SCiv; CCRiv; Siv; CBViv) à partir de la clé utilisateur chiffrée (CCCi) et d'un algorithme de vérification (ACASC), puis en comparant cette information de vérification à ladite information de protection ; et
- des moyens de blocage (1,OS) permettant à la carte de bloquer tout calcul ultérieur utilisant la clé utilisateur chiffrée (CCCi), dans le cas où l'information de vérification n'est pas identique à l'information de protection.

2. Dispositif selon la revendication 1, dans lequel l'information de protection est située dans une zone mémoire secrète (ZS) des moyens de stockage (3) de la carte.

3. Dispositif selon la revendication 1, dans lequel les moyens de détection comprennent des moyens de correction de la clé utilisateur.

4. Dispositif selon la revendication 1, dans lequel l'information de protection comprend un total de contrôle ou checksum (SCip).

5. Dispositif selon la revendication 1, dans lequel l'information de protection comprend un contrôle par redondance cyclique (CRC).

6. Dispositif selon la revendication 1, dans lequel l'information de protection comprend un nombre de bits (CBVip) de la clé utilisateur chiffrée.

7. Dispositif selon la revendication 1, dans lequel l'information de protection comprend une signature (Sip) calculée en utilisant une clé secrète (CS).

8. Dispositif selon la revendication 1, dans lequel les moyens de détection comprennent un algorithme (ACASC) exécuté par le microprocesseur (1) de la carte.

9. Dispositif selon la revendication 1, dans lequel :
- des moyens de déchiffrement sont agencés pour déchiffrer la clé utilisateur chiffrée (CCCi) en une clé utilisateur déchiffrée en utilisant ledit algorithme (ASCC) de chiffrement / déchiffrement de clé utilisateur, si l'information de vérification est identique à l'information de protection , ledit algorithme utilisant ladite clé diversifiée (CSPDi) ;
- les moyens de traitement de l'information (1) sont agencés pour stocker la clé utilisateur déchiffrée dans les moyens de stockage (3) de façon que celle-ci soit disponible pour un calcul.

10. Dispositif selon la revendication 1, pour protéger une clé utilisateur (CU) lors de son chargement dans la carte, caractérisé en ce que :
- il comprend un algorithme (ACU) de chiffrement / déchiffrement de chargement de clé utilisateur;
- il est agencé pour chiffrer la clé en vue de son chargement, et pour la déchiffrer après chargement en carte en vue de son chiffrement au moyen de l'algorithme (ASCC) de chiffrement / déchiffrement de clé utilisateur.

11. Dispositif selon la revendication 10, dans lequel l'algorithme (ASCC) de chiffrement / déchiffrement de clé utilisateur est différent de l'algorithme (ACU) de chiffrement / déchiffrement de chargement de clé utilisateur et est stocké dans une zone mémoire secrète de la carte.

12. Procédé pour stocker une clé utilisateur chiffrée dans une carte à puce, caractérisé en ce qu'il comprend les étapes consistant à :
- recevoir une clé utilisateur (CU);
- chiffrer, par des moyens de traitement de l'information (1) de la carte, cette clé utilisateur en une clé utilisateur chiffrée (CCCi) en utilisant une clé diversifiée (CSPDi) et un algorithme (ASCC) de chiffrement / déchiffrement de clé utilisateur;
- calculer, par les moyens de traitement de l'information (1), une information de protection (SCip ; CCRip ; Sip ; CBVip) en utilisant la clé utilisateur chiffrée (CCCi) et un algorithme de vérification (ACASC) ;
- stocker la clé utilisateur chiffrée (CCCi) en association avec l'information de protection dans une zone mémoire de la carte.

13. Procédé selon la revendication 12, dans lequel la clé utilisateur (CU) est envoyée à la carte sous une forme chiffrée (CCU) par un algorithme (ACU) de chiffrement / déchiffrement de chargement de clé utilisateur, ce procédé comprenant les étapes consistant à:
- déchiffrer, par les moyens de traitement de l'information (1) de la carte, la clé utilisateur chiffrée (CCU) en une clé utilisateur déchiffrée (CU) en utilisant l'algorithme (ACU) de chiffrement / déchiffrement de chargement de clé utilisateur; et
- chiffrer la clé utilisateur déchiffrée (CU) en ladite clé utilisateur chiffrée (CCCi) en moyen de l'algorithme (ASCC) de chiffrement / déchiffrement de clé utilisateur.

14. Procédé d'exploitation d'une clé utilisateur stockée dans une carte à puce sous une forme chiffrée (CCCi) au moyen d'une clé diversifiée (CSPDi) et d'un algorithme (ASCC) de chiffrement / déchiffrement de clé utilisateur, en association avec une information de protection (SCip ; CCRip ; Sip ; CBVip) calculée au moyen de la clé utilisateur chiffrée (CCCi) et d'un algorithme de vérification (ACASC), caractérisé en ce qu'il comprend les étapes consistant à:
- calculer par les moyens de traitement de l'information (1) de la carte, avant d'effectuer un calcul utilisant la clé utilisateur, une information de vérification (SCiv ; CCRiv ; Siv ; CBViv) en utilisant l'algorithme de vérification (ACASC) et la clé utilisateur chiffrée (CCCi) ;
- comparer l'information de vérification et l'information de protection pour vérifier l'intégrité de la clé utilisateur chiffrée (CCCi) ;
- bloquer l'usage de la clé utilisateur chiffrée (CCCi) si l'information de vérification n'est pas identique à l'information de protection ;
- déchiffrer, si l'information de vérification est identique à l'information de protection, la clé utilisateur chiffrée (CCCi), au moyen de l'algorithme (ASCC) de chiffrement / déchiffrement de clé utilisateur; et
- stocker la clé utilisateur déchiffrée (CU) soit dans une zone protégée d'une mémoire vive (4) de la carte , soit pour la durée d'une session dans une zone protégée d'une mémoire non volatile (3) de la carte.

## Patentansprüche

1. Schutzvorrichtung für einen Benutzerschlüssel (CU) einer Chipkarte, wobei die Vorrichtung in der Chipkarte angeordnet ist und dadurch gekennzeichnet ist, daß sie enthält:
- Informationsverarbeitungsmittel (1), die so beschaffen sind, daß sie eine verschlüsselte Form (CCCi) des Benutzerschlüssels (CU) anhand eines diversifizierten Schlüssels (CSPDi) und eines Verschlüsselungs-/Entschlüsselungs-Algorithmus (ASCC) für den Benutzerschlüssel berechnet;
- Speichermittel (3) zum Speichern des verschlüsselten Benutzerschlüssels (CCCi) und von ihm zugeordneten Schutzinformationen (SCip, CCRip; Sip; CBVip), die von diesem Schlüssel abhängige Informationen enthalten;
- Erfassungsmittel (OS), die der Karte ermöglichen, die Integrität des verschlüsselten Schlüssels (CCi) zu überprüfen, indem sie veranlassen, Überprüfungsinformationen (SCiv; CCRiv; Siv; CBViv) anhand des verschlüsselten Anwenderschlüssels (CCCi) und eines Überprüfungsalgorithmus (ACASC) durch die Informationsverarbeitungsmittel (1) zu berechnen und dann diese Überprüfungsinformationen mit den Schutzinformationen zu vergleichen; und
- Sperrmittel (1, OS), die der Karte ermöglichen, jede spätere Berechnung, die den verschlüsselten Benutzerschlüssel (CCCi) verwendet, zu sperren, falls die Überprüfungsinformationen mit den Schutzinformationen nicht übereinstimmen.

2. Vorrichtung nach Anspruch 1, in der sich die Schutzinformationen in einer geheimen Speicherzone (ZS) der Speichermittel (3) der Karte befinden.

3. Vorrichtung nach Anspruch 1, in der die Erfassungsmittel Mittel zum Korrigieren des Benutzerschlüssels enthalten.

4. Vorrichtung nach Anspruch 1, in der die Schutzinformationen eine Prüfsumme oder Checksum (SCip) enthalten.

5. Vorrichtung nach Anspruch 1, in der die Schutzinformationen eine zyklische Redundanzprüfung (CRC) enthalten.

6. Vorrichtung nach Anspruch 1, in der die Schutzinformationen eine Anzahl von Bits (CBVip) des verschlüsselten Benutzerschlüssels enthalten.

7. Vorrichtung nach Anspruch 1, in der die Schutzinformationen eine Signatur (Sip) enthalten, die unter Verwendung eines geheimen Schlüssels (CS) berechnet wird.

8. Vorrichtung nach Anspruch 1, in der die Erfassungsmittel einen Algorithmus (ACASC) enthalten, der durch den Mikroprozessor (1) der Karte ausgeführt wird.

9. Vorrichtung nach Anspruch 1, in der:
- Entschlüsselungsmittel so beschaffen sind, daß sie den verschlüsselten Benutzerschlüssel (CCCi) in einen entschlüsselten Benutzerschlüssel entschlüsseln, indem sie den Verschlüsselungs-/Entschlüsselungs-Algorithmus (ASCC) des Benutzerschlüssels verwenden, falls die Überprüfungsinformationen mit den Schutzinformationen übereinstimmen, wobei der Algorithmus den diversifizierten Schlüssel (CSPDi) verwendet;
- die Informationsverarbeitungsmittel (1) so beschaffen sind, daß sie den entschlüsselten Benutzerschlüssel in den Speichermitteln (3) in der Weise speichern, daß dieser für eine Berechnung verfügbar ist.

10. Vorrichtung nach Anspruch 1 zum Schützen eines Benutzerschlüssels (CU) bei seinem Laden in die Karte, dadurch gekennzeichnet, daß:
- sie einen Algorithmus (ACU) zum Verschlüsseln/Entschlüsseln des Ladens des Benutzerschlüssels enthält;
- sie so beschaffen ist, daß sie den Schlüssel für sein Laden verschlüsselt und nach seinem Laden in die Karte entschlüsselt, um ihn mittels des Verschlüsselungs-/Entschlüsselungs-Algorithmus (ASCC) des Benutzerschlüssels zu verschlüsseln.

11. Vorrichtung nach Anspruch 10, in der der Verschlüsselungs/Entschlüsselungs-Algorithmus des Benutzerschlüssels vom Algorithmus (ACU) zum Verschlüsseln/Entschlüsseln des Ladens des Benutzerschlüssels verschieden ist und in einer geheimen Speicherzone der Karte gespeichert ist.

12. Verfahren zum Speichern eines verschlüsselten Benutzerschlüssels in einer Chipkarte, dadurch gekennzeichnet, daß es die Schritte enthält, die darin bestehen:
- einen Benutzerschlüssel (CU) zu empfangen;
- durch Informationsverarbeitungsmittel (1) der Karte diesen Benutzerschlüssel unter Verwendung eines diversifizierten Schlüssels (CSPDi) und eines Verschlüsselungs-/Entschlüsselungs-Algorithmus (ASCC) des Benutzerschlüssels in einen verschlüsselten Benutzerschlüssel (CCCi) zu verschlüsseln;
- durch die Informationsverarbeitungsmittel (1) Schutzinformationen (SCip; CCRi; Sip; CBVip) unter Verwendung des verschlüsselten Benutzerschlüssels (CCCi) und eines Überprüfungsalgorithmus (ACASC) zu berechnen;
- den verschlüsselten Benutzerschlüssel (CCCi) und ihm zugeordnete Schutzinformationen in einer Speicherzone der Karte zu speichern.

13. Verfahren nach Anspruch 12, bei dem der Benutzerschlüssel (CU) in einer durch einen Algorithmus (ACU) zur Verschlüsselung/Entschlüsselung des Ladens des Benutzerschlüssels verschlüsselten Form zur Karte geschickt wird, wobei dieses Verfahren die Schritte enthält, die darin bestehen:
- durch die Informationsverarbeitungsmittel (1) der Karte den verschlüsselten Benutzerschlüssel (CCU) unter Verwendung des Algorithmus (ACU) zum Verschlüsseln/Entschlüsseln des Ladens des Benutzerschlüssels in einen entschlüsselten Benutzerschlüssel (CU) zu entschlüsseln; und
- den entschlüsselten Benutzerschlüssel (CU) mittels des Verschlüsselungs-/Entschlüsselungs-Algorithmus (ASCC) des Benutzerschlüssels in den verschlüsselten Benutzerschlüssel (CCCi) zu verschlüsseln.

14. Verfahren zum Nutzen eines Benutzerschlüssels, der in einer Chipkarte in einer verschlüsselten Form (CCCi) gespeichert ist, mittels eines diversifizierten Schlüssels (CSPDi) und eines Verschlüsselungs-/Entschlüsselungs-Algorithmus (ASCC) des Benutzerschlüssels und ihm zugeordneter Schutzinformationen (SCip; CCRip; Sip; CBVip), die mittels des verschlüsselten Benutzerschlüssels (CCCi) und eines Überprüfungsalgorithmus (ACASC) berechnet werden, dadurch gekennzeichnet, daß es die Schritte enthält, die darin bestehen:
- durch die Informationsverarbeitungsmittel (1) der Karte vor der Ausführung einer den Benutzerschlüssel verwendenden Berechnung unter Verwendung des Überprüfungsalgorithmus (ACASC) und des verschlüsselten Benutzerschlüssels (CCCi) Überprüfungsinformationen (SCiv; CCRiv; Siv; CBViv) zu berechnen;
- die Überprüfungsinformationen und die Schutzinformationen zu vergleichen, um die Integrität des verschlüsselten Benutzerschlüssels (CCCi) zu überprüfen;
- die Verwendung des verschlüsselten Benutzerschlüssels (CCCi) zu sperren, falls die Überprüfungsinformationen mit den Schutzinformationen nicht übereinstimmen;
- falls die Überprüfungsinformationen mit den Schutzinformationen übereinstimmen, Entschlüsseln des verschlüsselten Benutzerschlüssels (CCCi) mittels des Verschlüsselungs-/Entschlüsselungs-Algorithmus (ASCC) des Benutzerschlüssels; und
- Speichern des entschlüsselten Benutzerschlüssels (CU) entweder in einer geschützten Zone eines Schreib-Lese-Speichers (4) der Karte oder für die Dauer einer Sitzung in einer geschützten Zone eines nichtflüchtigen Speichers (3) der Karte.

## Claims

1. Device for protecting a user key (CU) of a smart card, installed in the smart card and characterised in that it comprises:
- information processing means (1) arranged so as to calculate an encrypted form (CCCi) of the user key (CU) from a diversified key (CSPDi) and an algorithm (ASCC) for encrypting/decrypting a user key;
- storage means (3) for storing the encrypted user key (CCCi) and, in association therewith, a piece of protection information (SCip; CCRip; Sip; CBVip) comprising information dependent on that key;
- detection means (OS) allowing the card to verify the integrity of the encrypted key (CCCi) by causing the information processing means (1) to calculate a piece of verification information (SCiv; CCRiv; Siv; CBViv) on the basis of the encrypted user key (CCCi) and a verification algorithm (ACASC), then by comparing this verification information with said protection information; and
- blocking means (1, OS) allowing the card to block any further calculation using the encrypted user key (CCCi), in the event that the verification information is not identical to the protection information.

2. Device according to Claim 1, in which the protection information is located in a secret memory zone (ZS) of the storage means (3) of the card.

3. Device according to Claim 1, in which the detection means comprise means for correcting the user key.

4. Device according to Claim 1, in which the protection information comprises a check total or checksum (SCip).

5. Device according to Claim 1, in which the protection information comprises a cyclic redundancy check (CRC).

6. Device according to Claim 1, in which the protection information comprises a number of bits (CBVip) of the encrypted user key.

7. Device according to Claim 1, in which the protection information comprises a signature (Sip) calculated by using a secret key (CS).

8. Device according to Claim 1, in which the detection means comprise an algorithm (ACASC) executed by the microprocessor (1) of the card.

9. Device according to Claim 1, in which:
- decryption means are arranged so as to decrypt the encrypted user key (CCCi) into a decrypted user key by using said algorithm (ASCC) for encrypting/decrypting the user key, if the verification information is identical to the protection information, said algorithm using said diversified key (CSPDi);
- the information processing means (1) are arranged so as to store the decrypted user key in the storage means (3) so that it is available for calculation.

10. Device according to Claim 1, for protecting a user key (CU) during its loading on the card, characterised in that:
- it comprises an algorithm (ACU) for encrypting/decrypting the loading of a user key;
- it is arranged so as to encrypt the key with a view to loading it, and to decrypt it after loading on a card with a view to encrypting it by means of the algorithm (ASCC) for encrypting/decrypting the user key.

11. Device according to Claim 10, in which the algorithm (ASCC) for encrypting/decrypting the user key is different from the algorithm (ACU) for encrypting/decrypting the loading of a user key and is stored in a secret memory zone of the card.

12. Method for storing an encrypted user key in a smart card, characterised in that it comprises the steps consisting in:
- receiving a user key (CU);
- through information processing means (1) of the card, encrypting this user key into an encrypted user key (CCCi) by using a diversified key (CSPDi) and an algorithm (ASCC) for encrypting/decrypting a user key;
- through the information processing means (1), calculating a piece of protection information (SCip; CCRip; Sip;, CBVip) by using the encrypted user key (CCCi) and a verification algorithm (ACASC);
- storing the encrypted user key (CCCi) in association with the protection in a memory zone of the card.

13. Method according to Claim 12 in which the user key (CU) is sent to the card in an encrypted form (CCU) by an algorithm (ACU) for encrypting/decrypting the loading of a user key, this method comprising the steps consisting in:
- through the information processing means (1) of the card, decrypting the encrypted user key (CCU) into a decrypted user key (CU) by using the algorithm (ACU) for encrypting/decrypting the loading of a user key; and
- encrypting the decrypted user key (CU) into said encrypted user key (CCCi) by means of the algorithm (ASCC) for encrypting/decrypting a user key.

14. Method for using a user key stored on a smart card in encrypted form (CCCi) by means of a diversified key (CSPDi) and an algorithm (ASCC) for encrypting/decrypting a user key, in association with a piece of protection information (SCip; CCRip; Sip;, CBVip) calculated by means of the encrypted user key (CCCi) and a verification algorithm (ACASC), characterised in that it comprises the steps consisting in:
- through the information processing means (1) of the card, and before making a calculation using the user key, calculating a piece of verification information (SCiv; CCRiv; Siv; CBViv) by using the verification algorithm (ACASC) and the encrypted user key (CCCi);
- comparing the verification information with the protection information, in order to verify the integrity of the encrypted user key (CCCi);
- blocking the use of the encrypted user key (CCCi) if the verification information is not identical to the protection information;
- if the verification information is identical to the protection information, decrypting the encrypted user key (CCCi), by means of the algorithm (ASCC) for encrypting/decrypting a user key; and
- storing the decrypted user key (CU) either in a protected zone of a random access memory (4) of the card or, for the duration of a session, in a protected zone of a nonvolatile memory (3) of the card.
